# EUROPEAN PATENT SPECIFICATION

(11) **EP 2 059 159 B1**
(45) Date of publication and mention of the grant of the patent: **06.10.2010**
(21) Application number: 07789305.5
(22) Date of filing: 23.08.2007
(51) Int. Cl.: A47L 5/28, A47L 9/00, A47L 9/16

(54) **SUPPORT ASSEMBLY**
STÜTZANORDNUNG
ENSEMBLE SUPPORT

(30) Priority: 01.09.2006 GB 0617184; 22.12.2006 GB 0625763
(43) Date of publication of application: 20.05.2009
(73) Proprietor: Dyson Technology Limited, Malmesbury, Wiltshire SN16 0RP (GB)
(72) Inventor: INGE, Douglas, Andrew, Malmesbury, Wiltshire SN16 0RP (GB); COURTNEY, Stephen, Benjamin, Malmesbury, Wiltshire SN16 0RP (GB)
(74) Representative: Lobban, Colin
(86) International application number: PCT/GB2007/003213
(87) International publication number: WO 2008/025956

(56) References cited:
- EP-A- 1 129 657
- EP-A- 1 250 880
- WO-A-2004/014211
- GB-A- 2 290 462
- GB-A- 2 422 094
- US-A- 3 401 952
- US-A- 4 809 395

## Description

This invention relates to a support assembly for a surface treating head or a surface treating appliance, such as a vacuum cleaner as described in the preamble of claim 1.

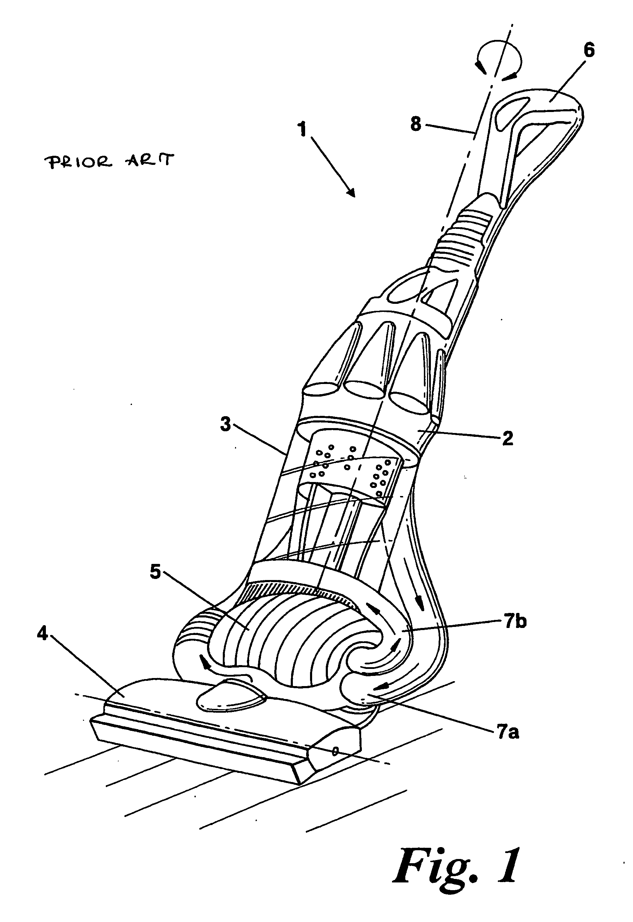

Surface treating appliances such as vacuum cleaners and floor polishers are well known. The majority of vacuum cleaners are either of the 'upright' type or of the 'cylinder' type, called canister or barrel cleaners in some countries. An example of an upright vacuum cleaner manufactured by Dyson Limited under the name DC15 ("DC15" is a trade mark of Dyson Limited) is shown in Figure 1. The vacuum cleaner, indicated generally by the reference numeral 1, comprises a main body 2, which houses the main components of the vacuum cleaner, including separating apparatus 3 for separating dirt, dust and other debris from a dirty airflow drawn in by a motor-driven fan (not visible in this drawing). A cleaner head 4 is mounted to the lower end of the main body 2.

Also at the lower end of the main body 2 is a support assembly in the form of a barrel-shaped roller 5. The roller 5 permits the cleaner 1 to be easily manoeuvred. In use, a user reclines the main body 2 of the vacuum cleaner 1 and then pushes and pulls a handle 6 which is fixed to the main body of the cleaner.. The vacuum cleaner 1 rolls along the floor surface on the roller 5, and may be steered by the user twisting the handle 6 about its longitudinal axis 8. This cleaner 1 is much more manoeuvrable than previous cleaners employing wheels. Various components of the cleaner are mounted within the roller 5 as a space-saving measure.

A problem which may be encountered with this appliance is that connections have to be made between the components mounted inside the roller 5 and other components on the cleaner 1. For example, where the roller 5 houses filters and other components that act on fluid being drawn into the appliance, ducts 7a, 7b have to be provided in order to create a fluid flow path between those components inside the roller 5 and those of the separating apparatus 3 on the main body 2. A good sealing connection has to be provided between these rigid ducts 7a, 7b and the rotatable roller 5, and a special bearing has to be provided to accommodate the ducts.

WO2004/014211 describes a surface treating appliance having a main body mounted to a support assembly. The support assembly comprises a single barrel-shaped roller or a plurality of rotatable parts that are arranged on a curved axis so as to provide a support surface that decreases in diameter at each end.

The invention provides a support assembly for a surface treating appliance or a surface treating head comprising a plurality of rollers defining a rolling support surface, the rollers comprising a central roller arranged to engage a floor surface and a pair of outer rollers at respective ends of the central roller, characterised in that the central roller has a smaller diameter at each end portion than at a central portion, the maximum diameter of the central roller is smaller than the maximum diameter of each outer roller, and each outer roller has a rotational axis that is spaced at the centre of each outer roller from the rotational axis of the central roller.

This arrangement of a central roller and outer rollers provides a substantially continuous symmetrical rolling support surface over a wide range of motions. Spacing the rotational axes of the rollers permits the rollers to be arranged relative to one another to define a region into which components of the appliance or head are mountable.

Preferably, the outer rollers have a common rotational axis to provide a symmetrical support surface. However, the outer rollers may have separate rotational axes spaced from each other.

Advantageously, when the support assembly is in an upright position, with the rotational axis of its central roller parallel with a floor or other surfaces to be treated, the rotational axis: or axes of the outer rollers is vertically higher than that of the central roller.

The central roller may be elongated and barrel-shaped, so that it is wider at its central portion than at the ends. This shape gives good stability.

The invention further provides a surface treating appliance, such as a vacuum cleaner, incorporating such a rolling support assembly.

The invention further provides a surface treating head incorporating such a rolling support assembly.

The term "surface treating appliance" is intended to have a broad meaning, and includes a wide range of machines having a head for travelling over a surface to clean or treat the surface in some manner. It includes, inter alia, machines which apply suction to the surface so as to draw material from it, such as vacuum cleaners (dry, wet and wet/dry), as well as machines which apply material to the surface, such as polishing/waxing machines, pressure washing machines, ground marking machines and shampooing machines. It also includes lawn mowers and other cutting machines.

Use of the term "roller" is intended to encompass wheels and rolling surfaces in general.

The invention will now be described, by way of example, with reference to the accompanying drawings, in which:
Figure 1 is a perspective view of a vacuum cleaner incorporating a known type of support assembly;
Figure 2 is a rear view of a vacuum cleaner incorporating a support assembly constructed according to the invention;
Figure 3 is a perspective view of the vacuum cleaner of Figure 2 in use;
Figure 4 is a schematic, partly cut-away rear view of the support assembly of Figures 2 and 3;
Figure 5 is a rear view of the support assembly in more detail;
Figure 6 is a perspective view of the support assembly in detail;
Figures 7 to 10 are schematic drawings of an alternative support assemblies constructed according to the invention;
Figure 11a is a perspective view from above of a surface treating head incorporating a support assembly constructed according to the invention;
Figure 11b is a perspective view from below of the head of Figure 11 a;
Figure 11c is a side view of the head of Figures 11a and 11b; and
Figure 12 is a perspective view of the head of Figures 11a, b and c in use.

Like reference numerals refer to like parts throughout the specification.

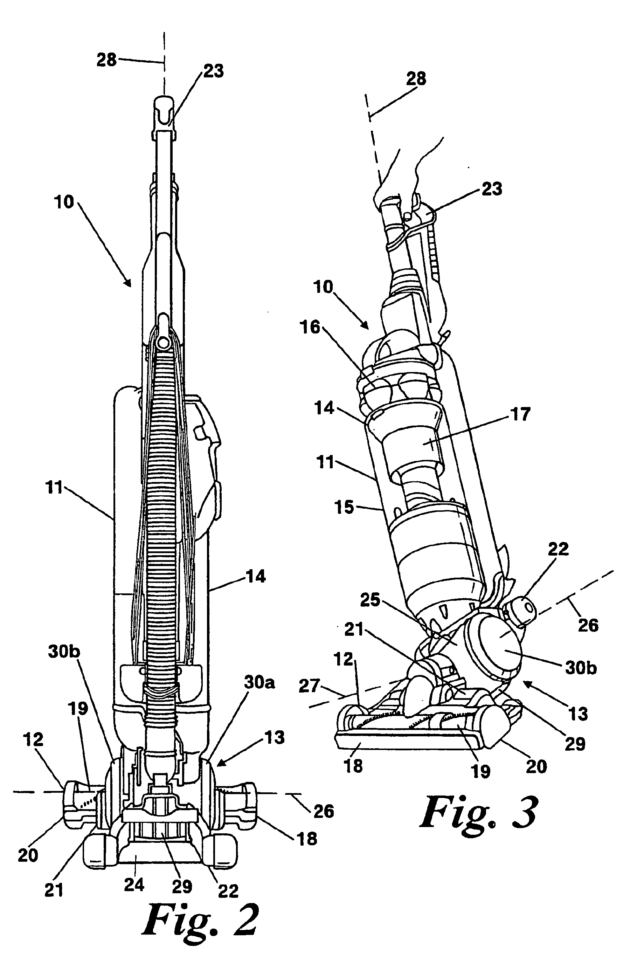

With reference to Figures 2 and 3, a surface treating appliance is shown in the form of a vacuum cleaner and is indicated generally by the reference numeral 10. The vacuum cleaner 10 comprises a main body 11, a cleaner head 12 and a rolling support assembly 13 for rolling the cleaner along a floor surface. The main body 11 houses a motor and fan for generating a suction airflow (not visible in these drawings) as well as separating apparatus 14 for separating dirt, dust and other debris from a dirty airflow drawn into the machine by the fan and motor.

In this embodiment, the separating apparatus 14 is cyclonic, in which the dirt and dust is spun from the airflow. The cyclonic separating apparatus 14 comprises two stages of cyclone separation arranged in series with one another. The first stage is a cylindrically-walled chamber 15 and the second stage comprises a set 16 of tapering, substantially frusto-conically shaped chambers arranged in parallel with one another. Airflow is directed tangentially into the upper part of the chamber 15. Larger debris and particles are removed and collected in the chamber 15. The airflow then passes through a shroud 17 to the set 16 of smaller frusto-conically shaped cyclonic chambers. Finer dust is separated by these chambers and the separated dust is collected in a common collecting region.

The main body 11 also houses filters (not visible in these drawings) for trapping fine particles in the cleaned airflow. These filters remove any fine particles of dust which have not already been removed from the airflow by the separating apparatus. A first filter, called a pre-motor filter, is provided before the motor and fan. A second filter, called a post-motor filter, is provided after the motor and fan. Where the motor for driving the suction fan has carbon brushes, the post-motor filter also serves to trap any carbon particles emitted by the brushes. Clean air is then expelled to the atmosphere.

The cleaner head 12 is pivotably mounted to the lower end of the main body 11, and serves, in use, to treat the floor surface. In this embodiment, it comprises a housing 18 with a chamber for supporting an agitator in the form of a brush bar 19. The lower, floor-facing side of the chamber has an air inlet slot 20 and the brush bar 19 is rotatably mounted in the chamber such that bristles on the brush bar can protrude through the inlet slot and can agitate the floor surface over which the cleaner head passes. The brush bar 19 is rotatably driven by a dedicated motor 21 positioned on the rear of the cleaner head 12.

The rolling support assembly 13 permits the cleaner to be manoeuvred along a floor surface. In order to provide extra support for the cleaner when the main body 11 is in the vertical position, as in Figure 1, a stand 22 is provided.

A user-operable handle 23 extends upwardly from the rear part of the main body 11. When the cleaner 10 is in the position shown in Figures 1 and 2, it can be used in a cylinder mode, in which case the handle 23 may be released and used as a hose and wand assembly. A changeover valve on the main body 11 automatically connects the dust separating apparatus 14 to the wand and hose so that cleaner can be used in cylinder mode for above the floor cleaning. Air is drawn into the cleaner through the end of the wand which can be released from the cleaner for appropriate manipulation. The inlet 20 in the cleaner head 10 is automatically shut off.

When the cleaner 10 is to be used in conventional upright mode, the user reclines the main body 11 whilst depressing a pedal 24 associated with the stand 22. A mechanism on the main body 9 causes the stand 22 to pivot into a position where it lies against the main body, as can be seen in Figure 3. The changeover valve automatically shuts off the air inlet at the distal end of the wand handle 23 and connects the dust separating apparatus 14 to the inlet 20 in the cleaner head 12.

The cleaner head 12 is connected to the main body 11 of the vacuum cleaner 10 in such a manner that the cleaner head remains in contact with a floor surface as the main body is manoeuvred through a wide range of operating positions, e.g. when moved from side-to-side or when the main body is twisted about its longitudinal axis. A linkage in the form of a yoke 25 forms a connection between the main body 9 and the cleaner head 10. The yoke 25 comprises a shell, which is moulded to incorporate two rotational axes 26, 27. The first axis 26, which extends across the sides of the shell, permits the main body 11 to pivot with respect to the yoke when it is reclined for a cleaning operation in the upright mode. The second axis 27, which depends from the front of the shell, permits the housing 18 of the head 12 to turn with respect to the yoke 25 when the cleaner is being steered along a floor surface. The two axes 26, 27 are transverse to each other. This arrangement permits the cleaner 10 to be more easily manoeuvred than traditional vacuum cleaners.

Figure 3 shows the vacuum cleaner in a turning position. The user rotates the main body about its longitudinal axis 28 by means of the handle 23. This causes a longitudinal axis of the rolling support assembly 13 to tilt with respect to the floor. The pivoting connections 26, 27 associated with the yoke 25 cause the housing 18 of the cleaner head 12 to turn whilst remaining in contact with the floor. The extent to which the main body 11 is turned about its longitudinal axis 28 determines the extent to which the cleaner head 12 moves from its forward facing position towards the right or left. The stand 22 remains neatly tucked up against the rear of the main body 11 during this range of motions performed by the cleaner 10. This permits the user easily to manoeuvre the cleaner 10, even when cleaning under furniture and other low obstructions.

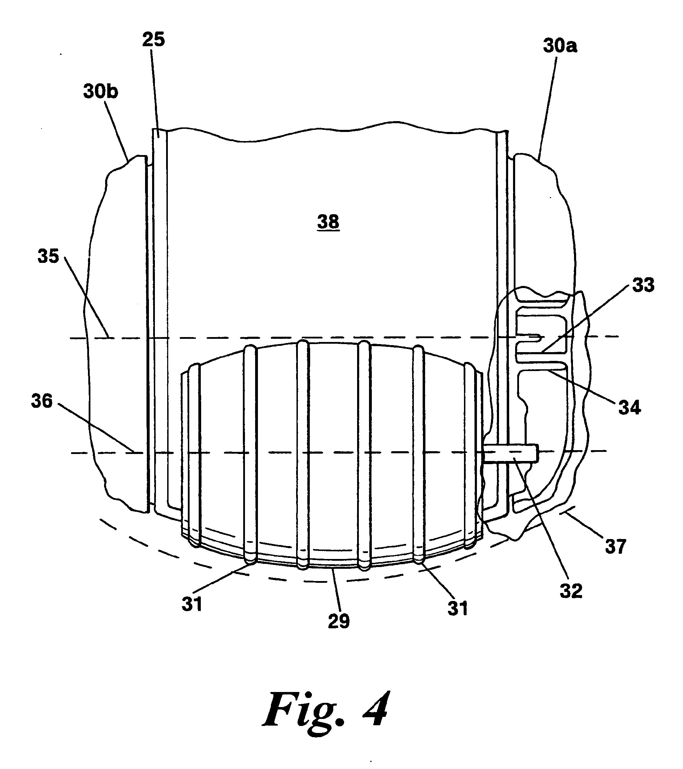

In accordance with the invention, the rolling support assembly 13 comprises a central roller 29 and a pair of outer rollers 30a, 30b, which are arranged relative to each other so as to provide a rolling support surface, but with rotational axes that are spaced from each other. This arrangement is shown in the partly cut-away schematic drawing of Figure 4.

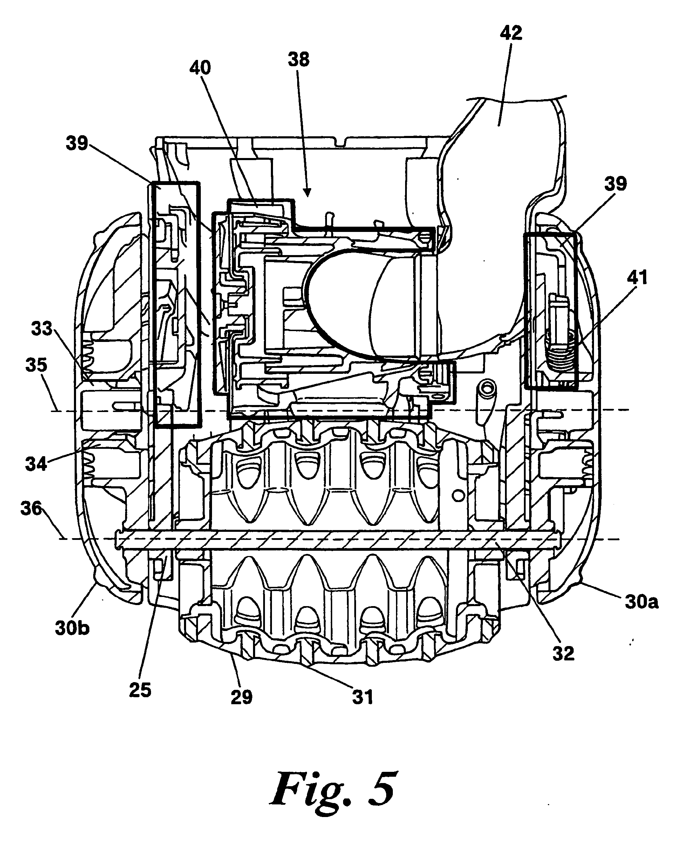

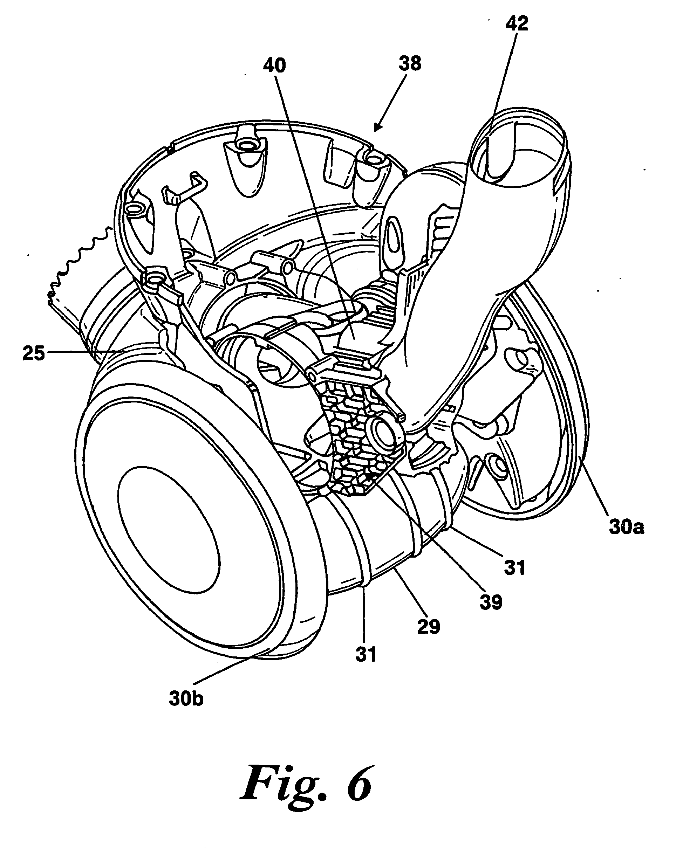

The central roller 29 comprises an elongated and barrel-shaped shell, which shape provides both stability and manoeuvrability. A plurality of ridges 31 are provided around its circumference, equally spaced along its length. The ridges 31 provide extra grip as the support assembly 13 is rolled along a surface to be treated. The central roller 29 is rotatably mounted to the yoke 25 by means of an axle 32. The yoke 25 also rotatably supports the pair of outer rollers, 30a, 30b, which are mounted adjacent opposite respective ends of the central roller 29. The outer rollers 30a, 30b, are cap-shaped, having a larger diameter than the maximum diameter of the central roller 29 but a relatively narrow rolling surface. Each of the outer rollers 30a, 30b, has a collar 33 formed on its inner surface. The collar 33 fits onto a neck 34 formed in the yoke 25 such that the outer roller 30a can rotate with respect to the yoke. The outer rollers 30a, 30b, have a common rotational axis 35 that is spaced from the rotational axis 36 of the central roller 29. In this embodiment, the axes 35, 36 are spaced so that, when the support assembly is in the upright position, with the rotational axes parallel to the floor surface, the rotational axis 35 of the outer rollers 30a, 30b, is spaced further from the floor than is the rotational axis 36 of the central roller 29. The rollers 29, 30a, 30b, together define a rolling support surface 37. This arrangement of rollers delimits a region 38 into which components of the vacuum cleaner 10 may be mounted, as is shown in Figures 5 and 6.

In these drawings, a plurality of components is mounted within the region 38. A first group 39 of components, mounted adjacent the yoke 25, together form a mechanism for urging the stand between its supporting position and its position against the main body. This mechanism includes a helical spring 41. A second group 40 of components form part of the previously-mentioned changeover valve. Another component in the form of a fluid conduit 42 is also mounted in this region, conveniently adjacent the changeover valve. This conduit 42 provides a fluid flow path between the cleaner head 12 and the main body 11. The arrangement of rollers 29, 30a, 30b, both protects and hides the components within this region 38. This provides advantages in safety and reliability, as well as being more aesthetically pleasing to the user.

In use, the rolling support assembly 13 provides support for the cleaner 10 over a wide range of movements, as the head 12 is steered over a surface to be treated. Although there is a slight discontinuity of the support surface 37 in the space between the central roller 29 and the adjacent outer roller 30a or 30b, at least one roller of the support assembly 13 provides support for the cleaner 10 in all positions, even at the extremes of movement.

The arrangement of rollers provides a rolling support assembly having a low central region and higher side regions, which together form a protective envelope for the region 38. When compared with the prior art arrangement of Figure 1, there is still a wide and supportive rolling surface that enables the cleaner to travel over a surface to be treated. There is also still a region within the volume defined by the rolling support assembly into which components of the cleaner may be mounted. However, the region is not wholly enclosed within the envelope of the rolling support assembly, as was the case with the roller 6 of Figure 1. It is much more straightforward to connects components of the cleaner located in the region defined by the rollers with other components on the main body of the cleaner. Straightforward mechanical connections and seals may be provided.

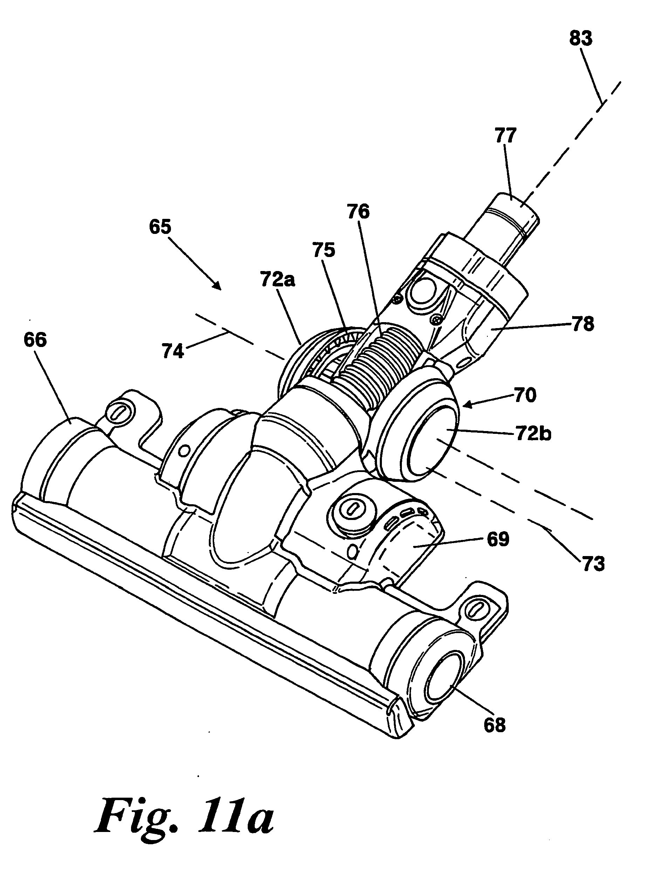

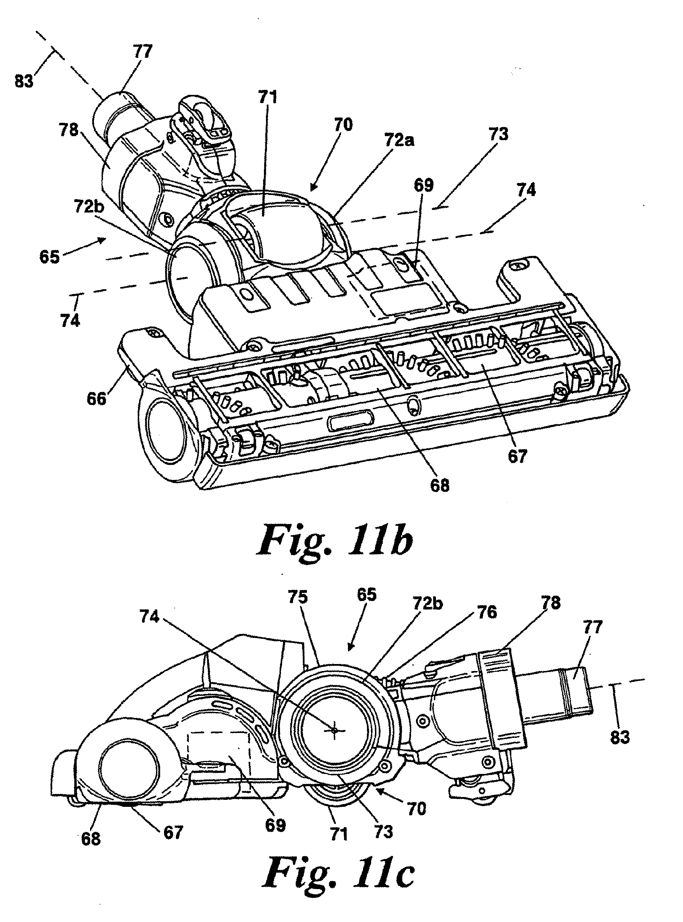

Figures 11 (a, b and c) and 12 illustrate a surface treating head, indicated generally by the reference numeral 65, incorporating a support assembly constructed according to the invention. The head 65 comprises a housing 66 with a chamber for supporting an agitator in the form of a brush bar 67. The lower, floor-facing side of the chamber has an air inlet slot 68 and the brush bar 67 is rotatably mounted in the chamber such that bristles on the brush bar can protrude through the inlet slot and can agitate the floor surface over which the surface treating head passes. The brush bar 67 is rotatably driven by a dedicated motor 69 positioned on the rear of the housing 66.

The head 65 further comprises a rolling support assembly 70 arranged to roll with respect to the housing 66, and which permits the head to be manoeuvred along a floor surface. In accordance with the invention, the rolling support assembly 70 comprises a central roller 71 and a pair of outer rollers 72a, 72b, which are arranged relative to each other so as to provide a rolling support surface. The central roller 71 has a rotational axis 73 that is spaced from the common rotational axis 74 of the outer rollers 72a, 72b.

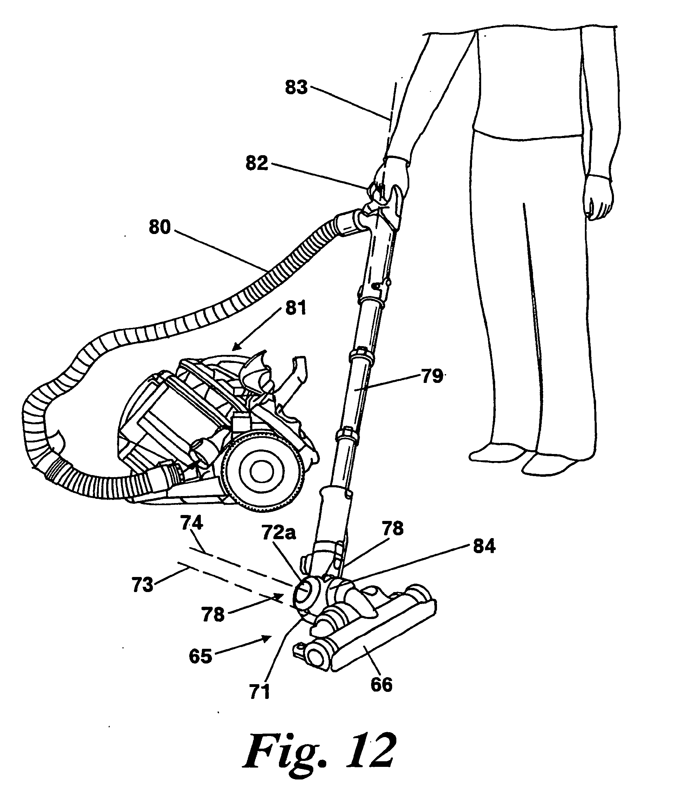

The axes 73, 74 are spaced so that, when the support assembly 70 is in the upright position, with the rotational axes parallel to a floor surface, the rotational axis 74 of the outer rollers 72a, 72b, is spaced further from the floor than is the rotational axis 73 of the central roller 71. This arrangement of rollers delimits a region 75 into which components of the head 65 may be mounted. In this embodiment, a fluid conduit 76 is located. The fluid conduit 76 provides a fluid flow path for air drawn into the head 65 via the air inlet slot 68, so that the air passes to an outlet 77 located on the neck 78 at the rear of the head 65. The neck 78 permits the head 65 to be connected to a wand or hose for a cleaning operation, such as is illustrated in Figure 12.

Figure 12 shows the head 65 in use. The neck 78 is connected to one end portion of a wand 79 which, in turn, is connected to a hose 80. The hose 80 is connectable to a surface-treating appliance, such as a cylinder vacuum cleaner 81. The wand 79 includes a handle 82, which enables the user to manipulate the wand. In use, the user rotates the neck 78 of the head 65 by rotating the wand 79 about the common longitudinal axis 83 of the neck and wand by means of the handle 82. This causes a longitudinal axis of the rolling support assembly 70 to tilt with respect to the floor. A rotatable joint 84 located between the housing 66 and the rolling support assembly 70 permits the housing of the head 65 to turn whilst remaining in contact with the floor. The extent to which the wand 79, and hence the neck 78 is turned about the longitudinal axis 83 determines the extent to which the head 65 moves from its forward facing position towards the right or left.

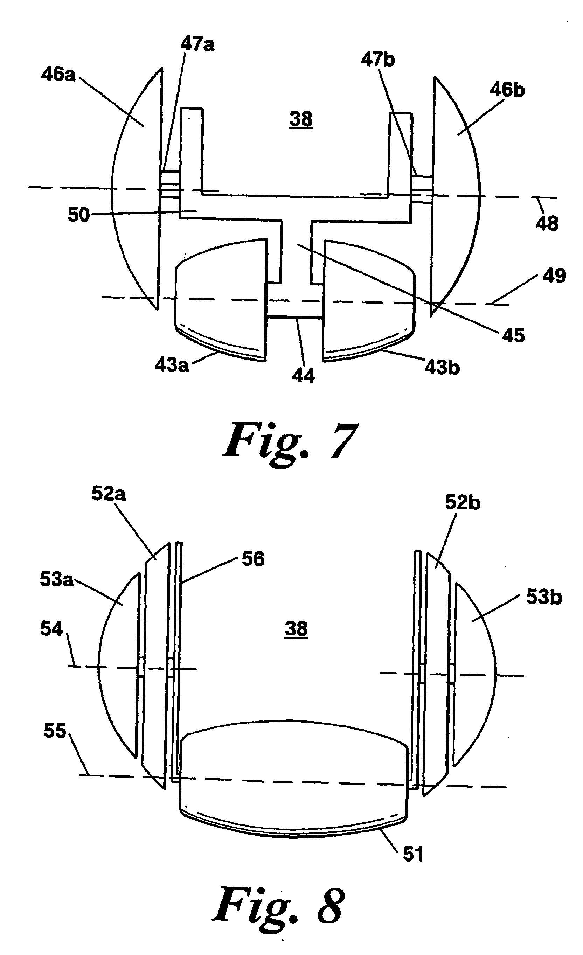

Figures 7 to 10 schematically illustrate alternative forms that the invention could take. Each roller need not comprise a single rolling member, but may instead be made up of a plurality of rolling members. For example, in Figure 7, the central roller 43 comprises a pair of wheels 43a, 43b, mounted on a common axle 44. A strut 45 extends upwardly from the axle 44 between the wheels 43a, 43b. Each wheel 43a, 43b, has a larger diameter at the end portion near the strut 45 than at its other end portion adjacent the outer rollers 46a, 46b, so that the overall profile of the rolling support surface of the wheels 43a, 43b is approximately barrel-shaped. In this embodiment, the outer rollers 46a, 46b, comprise caps having partly spherical outer surfaces with rounded ends. Each outer roller 46a, 46b has its own axle 47a, 47b, but a common rotational axis 48. This common rotational axis 48 is spaced from the rotational axis 49 of the central roller 43.
The axles 44, 47a and 47b are rotatably mounted to a frame 50, from which the strut 45 extends.

In the embodiment of Figure 8, the central roller comprises a single elongated rolling member 51. The outer rollers comprise two pairs of roller members. The first pair of outer roller members 52a, 52b, is provided adjacent each end of the central roller 51. Each roller member 52a, 52b of the first pair has a tapered surface, with the end portion of larger diameter being adjacent the central roller 51. The other end portions of smaller diameter are adjacent a second pair of roller members 53a, 53b, in the form of rounded caps. The first and second pairs 52, 53 have a common rotational axis 54, which simplifies assembly of this arrangement, but could, of course, be mounted so as to have separate rotational axes spaced from each other. The rotational axis 54 of the outer rollers 52, 53 is spaced vertically from the rotational axis 55 of the central roller 51 and all of the rollers are mounted on a common frame 56.

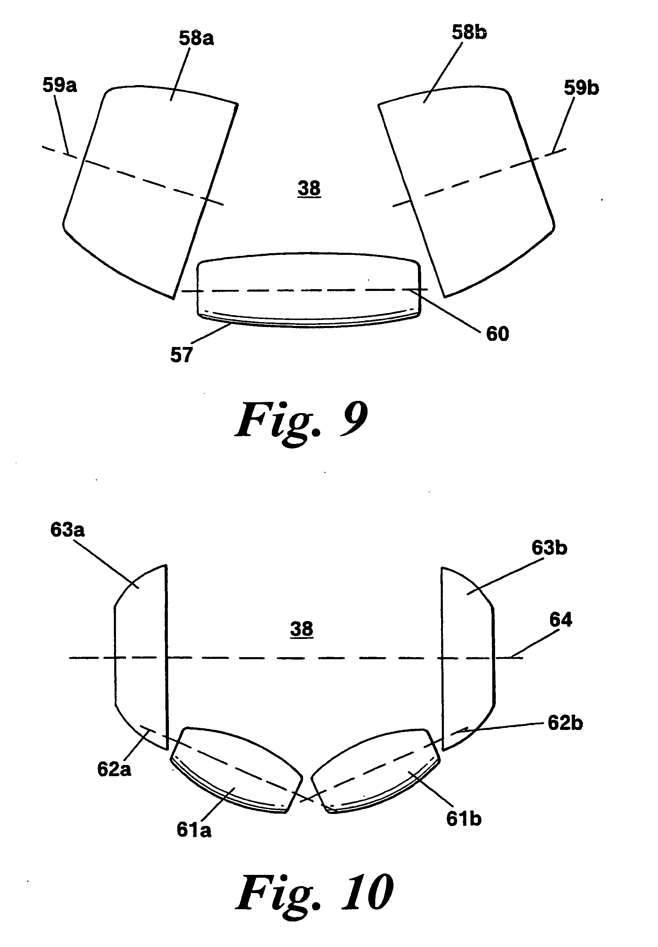

The rotational axes of the rollers need not be parallel. In the embodiment shown in Figure 9, the roller assembly comprises a central elongated roller 57 having a pair of tilted outer rollers 58a, 58b. Each outer roller 58a, 58b is approximately half-barrel shaped, with its largest diameter adjacent the central roller 57. The outer rollers 58a, 58b do not rotate about a common axis but instead have different respective axes 59a, 59b. Each axis 59a, 59b is spaced from the rotational axis 60 of the central roller 57 and tilted with respect to it. The axes 59a, 59b are tilted so that each outer roller 58a, 58b is tilted toward the central roller 57. Naturally, the outer rollers 58a, 58b could be tilted so as to be inclined away from the central roller 57. The frame or yoke onto which the rollers may be mounted is not shown in this drawing, nor in Figure 10.

Finally, in the alternative arrangement of Figure 10, the central roller comprises a pair of barrel-shaped roller members 61a, 61b. These central members 61a, 61b do not rotate about a common axis, but instead have separate rotational axes 62a, 62b, that are inclined with respect to each other. The outer rollers comprise a pair of rotatable caps 63a, 63b of relatively large diameter. The caps rotate about a common axis 64 that is substantially parallel to a floor surface when the assembly is placed upright on a floor. This arrangement gives good stability when the assembly is steered to the left or right.

Although arrangements have been shown having a pair of outer rollers mounted at respective ends of the central roller, the support assembly may only have one outer roller at one end of the central roller. This solitary outer roller may itself comprise a plurality of rotatable members. This arrangement would be employed in a support assembly arranged to turn predominantly in one direction, or where more support is required at one end of the assembly than the other. In general, a symmetrical arrangement, having outer rollers at both ends of the central roller, is preferred.

While the illustrated embodiment shows a vacuum cleaner in which ducts carry airflow, it will be appreciated that the invention can be applied to vacuum cleaners which carry other fluids, such as water and detergents, as well as other surface-treating appliances.

## Claims

1. A support assembly (13;70) for a surface treating appliance (10) or a surface treating head (65) comprising a plurality of rollers defining a rolling support surface (37), the rollers comprising a central roller (29, 71) arranged to engage a floor surface and a pair of outer rollers (30a,30b;72a,72b) at respective ends of the central roller, **characterised in that** the central roller has a smaller diameter at each end portion than at a central portion, the maximum diameter of the central roller is smaller than the maximum diameter of each outer roller, and each outer roller has a rotational axis (35;74) that is spaced at the centre of each outer roller from the rotational axis (36;73) of the central roller.

2. An assembly as claimed in claim 1, wherein the outer rollers have a common rotational axis.

3. An assembly as claimed in claim 1 or 2, wherein each outer roller has a smaller diameter at its end portion remote from the central roller than at its end portion adjacent the central roller.

4. An assembly as claimed in any preceding claims, wherein at least one of the rollers comprises a plurality of roller members.

5. A surface treating appliance including a support assembly as claimed in any preceding claim, the appliance comprising a main body having a longitudinal axis and a surface-treating head, the support assembly being arranged to roll with respect to the main body for allowing the appliance to be rolled along a surface.

6. An appliance as claimed in claim 5, wherein the rollers of the support assembly delimit a region housing a component.

7. An appliance as claimed in claim 6, wherein the component comprises a fluid flow conduit.

8. An appliance as claimed in claim 6 or 7, further comprising a stand moveable between a supporting position, in which it supports the main body, and a stored position, wherein the component comprises an actuating mechanism arranged to urge the stand between the supporting and stored positions.

9. An appliance as claimed in any one of claims 5 to 8, further comprising a linkage between the main body and the surface treating head arranged such that rotating the main body about its longitudinal axis causes the surface treating head to turn in a new direction.

10. A surface treating head including a support assembly as claimed in any one of claims 1 to 4.

11. A head as claimed in claim 10, wherein the rollers of the support assembly delimit a region housing a component.

12. A head as claimed in claim 11, wherein the component comprises a fluid flow conduit.

13. A head as claimed in claim 10, 11 or 12, further comprising a neck adapted to be connectable to a wand or hose of a surface treating appliance, and a joint arranged such that rotating the neck about its longitudinal axis causes the surface treating head to turn in a new direction.

14. A surface treating appliance as claimed in any one of claims 5 to 9 or including a support assembly as claimed in any one of claim 1 to 4, wherein the surface treating appliance is in the form of a vacuum cleaner.

## Patentansprüche

1. Stützanordnung (13; 70) für ein Oberflächenbehandlungsgerät (10) oder einen Oberflächenbehandlungskopf (65), umfassend eine Mehrzahl von Rollen, die eine Rollen-Stützfläche (37) definieren, wobei die Rollen eine mittlere Rolle (29, 71) umfassen, die angeordnet ist, um mit einer Fußbodenoberfläche in Eingriff zu kommen, und ein Paar äußere Rollen (30a, 30b; 72a, 72b) an jeweiligen Enden der mittleren Rolle, **dadurch gekennzeichnet, dass** die mittlere Rolle einen kleineren Durchmesser an jedem Endabschnitt als an einem mittleren Abschnitt hat, der maximale Durchmesser der mittleren Rolle kleiner als der maximale Durchmesser jeder äußeren Rolle ist, und jede äußere Rolle eine Rotationsachse (35; 74) hat, die an der Mitte jeder äußeren Rolle von der Rotationsachse (36; 73) der mittleren Rolle beabstandet ist.

2. Anordnung nach Anspruch 1, wobei die äußeren Rollen eine gemeinsame Rotationsachse haben.

3. Anordnung nach Anspruch 1 oder 2, wobei jede äußere Rolle einen kleineren Durchmesser an ihrem von der mittleren Rolle entfernten Endabschnitt hat, als an ihrem an die mittlere Rolle angrenzenden Endabschnitt.

4. Anordnung nach einem der vorangehenden Ansprüche, wobei mindestens eine der Rollen eine Mehrzahl von Rollerelementen umfasst.

5. Oberflächenbehandlungsgerät einschließend eine Stützanordnung nach einem der vorangehenden Ansprüche, wobei das Gerät einen Hauptkörper mit einer Längsachse und einen Oberflächenbehandlungskopf umfasst, wobei die Stützanordnung angeordnet ist, um bezüglich des Hauptkörpers zu rollen, um dem Gerät zu gestatten, entlang einer Oberfläche gerollt zu werden.

6. Gerät nach Anspruch 5, wobei die Rollen der Stützanordnung einen Bereich abgrenzen, der einen Bestandteil beherbergt.

7. Gerät nach Anspruch 6, wobei der Bestandteil einen Fluidstromkanal umfasst.

8. Gerät nach Anspruch 6 oder 7, ferner umfassend einen Fuß, der zwischen einer Stützposition, in der er den Hauptkörper trägt, und einer Aufbewahrungsposition bewegt werden kann, wobei der Bestandteil einen Betätigungsmechanismus umfasst, der angeordnet ist, um den Fuß zwischen der Stütz- und Aufbewahrungsposition anzutreiben.

9. Gerät nach einem der Ansprüche 5 bis 8, ferner umfassend eine Verbindung zwischen dem Hauptkörper und dem Oberflächenbehandlungskopf, die so angeordnet ist, dass die Rotation des Hauptkörpers um seine Längsachse den Oberflächenbehandlungskopf dazu bringt, in eine neue Richtung zu drehen.

10. Oberflächenbehandlungskopf einschließend eine Stützanordnung nach einem der Ansprüche 1 bis 4.

11. Kopf nach Anspruch 10, wobei die Rollen der Stützanordnung einen Bereich abgrenzt, der einen Bestandteil beherbergt.

12. Kopf nach Anspruch 11, wobei der Bestandteil einen Fluidstromkanal umfasst.

13. Kopf nach Anspruch 10, 11 oder 12, ferner umfassend einen Ansatz, der angepasst ist, um mit einem Schlauch oder einem Handrohr eines Oberflächenbehandlungsgeräts verbunden zu werden, und einen Anschluss, der so angeordnet ist, dass die Rotation des Ansatzes um seine Längsachse den Oberflächenbehandlungskopf dazu bringt, in eine neue Richtung zu drehen.

14. Oberflächenbehandlungsgerät nach einem der Ansprüche 5 bis 9 oder einschließend eine Stützanordnung nach einem der Ansprüche 1 bis 4, wobei das Oberflächenbehandlungsgerät die Form eines Staubsaugers hat.

## Revendications

1. Ensemble de support (13; 70) pour un appareil de traitement de surface (10) ou tête de traitement de surface (65) comprenant une pluralité de roulettes définissant une surface de support roulante (37), les roulettes comprenant une roulette centrale (29, 71) disposée pour entrer en contact avec une surface du sol et une paire de roulettes extérieures (30a, 30b; 72a, 72b) à des extrémités respectives de la roulette centrale, **caractérisé en ce que** la roulette centrale a un diamètre plus petit à chaque partie d'extrémité qu'à une partie centrale, le diamètre maximum de la roulette centrale est inférieur au diamètre maximum de chaque roulette extérieure, et chaque roulette extérieure a un axe de rotation (35; 74) qui est espacé au centre de chaque roulette extérieure de l'axe de rotation (36; 73) de la roulette centrale.

2. Ensemble selon la revendication 1, dans lequel les roulettes extérieures ont un axe de rotation commun.

3. Ensemble selon la revendication 1 ou 2, dans lequel chaque roulette extérieure a un diamètre plus petit à sa partie d'extrémité éloignée de la roulette centrale qu'à sa partie d'extrémité adjacente à la roulette centrale.

4. Ensemble selon l'une quelconque des revendications précédentes, dans lequel au moins une des roulettes comprend une pluralité d'éléments de roulettes.

5. Appareil de traitement de surface incluant un ensemble de support selon l'une quelconque des revendications précédentes, l'appareil comprenant un corps principal ayant un axe longitudinal et une tête de traitement de surface, l'ensemble de support étant arrangé pour rouler par rapport au corps principal pour permettre à l'appareil d'être déplacé par roulement le long d'une surface.

6. Appareil selon la revendication 5, dans lequel les roulettes de l'ensemble de support délimitent une région logeant un composant.

7. Appareil selon la revendication 6, dans lequel le composant comprend un canal de flux de liquide.

8. Appareil selon la revendication 6 ou 7, comprenant en outre un pied déplaçable entre une position de support, dans laquelle il supporte le corps principal, et une position de rangement, dans lequel le composant comprend un mécanisme de commande disposé pour solliciter le pied entre les positions de support et de rangement.

9. Appareil selon l'une quelconque des revendications 5 à 8, comprenant en outre une connexion entre le corps principal et la tête de traitement de surface telle que la rotation du corps principal sur son axe longitudinal entraîne un changement de direction de la tête de traitement de surface.

10. Tête de traitement de surface incluant un ensemble de support selon l'une quelconque des revendications 1 à 4.

11. Tête selon la revendication 10, dans laquelle les roulettes de l'ensemble de support délimitent une région logeant un composant.

12. Tête selon la revendication 11, dans laquelle le composant comprend un canal de flux de liquide.

13. Tête selon la revendication 10, 11, ou 12, comprenant en outre un collet adapté pour être connecté à un tuyau ou un flexible d'un appareil de traitement de surface, et un joint disposé de sorte que la rotation du collet sur son axe longitudinal entraîne un changement de direction de la tête de traitement de surface.

14. Appareil de traitement de surface selon l'une quelconque des revendications 5 à 9 ou incluant un ensemble de support selon l'une quelconque des revendications 1 à 4, dans lequel l'appareil de traitement de surface est sous la forme d'un aspirateur.
